# EUROPÄISCHE PATENTSCHRIFT

(11) **EP 0 794 445 B1**
(45) Veröffentlichungstag und Bekanntmachung des Hinweises auf die Patenterteilung: **03.11.2004**
(21) Anmeldenummer: 97102145.6
(22) Anmeldetag: 11.02.1997
(51) Int. Cl.: G02B 6/34, G02B 6/12

(54) **Vorrichtung zur wellen-längenmässigen Stabilisierung eines optischen Filters**
Device for wavelength stabilisation of an optical filter
Dispositif pour stabilisation en longueur d'onde d'un filtre optique

(30) Priorität: 06.03.1996 DE 19608732
(43) Veröffentlichungstag der Anmeldung: 10.09.1997
(73) Patentinhaber: Infineon Technologies AG, 81669 München (DE)
(72) Erfinder: Reichelt, Achim, 82008 Unterhaching (DE); Heise, Gerhard, Dr,, 81739 München (DE); Michel, Herbert, 81547 München (DE); März, Reinhard, Dr., 81667 München (DE)
(74) Vertreter: Epping Hermann & Fischer

(56) Entgegenhaltungen:
- EP-A- 0 607 782
- EP-A- 0 613 263
- EP-A- 0 639 782

## Beschreibung

Die Erfindung betrifft eine Vorrichtung und ein Verfahren zur wellenlängenmäßigen Stabilisierung eines optischen Filters, insbesondere eines Wellenlängen-Multiplexers/Demultiplexers.

Zur Übertragung und Verteilung von Information über optische Fasern, beispielsweise Glasfasern, werden zunehmend Wellenlängen-Multiplex/Demultiplex-Verfahren eingesetzt, bei denen über die gleiche Faser auf durch verschiedene optische Trägerfrequenzen definierten Frequenzkanälen unterschiedliche Informationen gleichzeitig übertragen werden. Zum Multiplexen und Demultiplexen dieser optischen Kanäle werden schmalbandige optische Filter benötigt.

In der EP 0 639 782 A1 ist ein optisches Netzwerk mit einem Wellenlängen-Multiplexer beschrieben, bei dem mehrere parallel geführte Wellenleiter unterschiedlicher Längen zwischen zwei Freiraumbereichen reduzierter Wellenführung vorhanden sind.

In der EP 0 613 263 A1 ist ein optisches Netzwerk beschrieben, bei dem ein Wellenlängen-Multiplexer mit Wellenleitern eingesetzt wird. Die Wellenleiter sind in zwei Gruppen parallel zueinander geführter Wellenleiterabschnitte angeordnet, zwischen denen ein Freiraumbereich mit reduzierter Wellenführung vorhanden ist. Die Wellenleiterabschnitte der einen Gruppe sind unterschiedlich lang und an dem von dem Freiraumbereich abgewandten Ende reflexiv abgeschlossen. In einen zentralen Wellenleiterabschnitt der anderen Gruppe wird ein aus mehreren Wellenlängen überlagertes Signal eingespeist, das durch den Freiraumbereich in die verschieden langen Wellenleiterabschnitte geführt, an deren Ende reflektiert und nach erneutem Durchtritt durch den Freiraumbereich, nach Wellenlängen aufgeteilt, in verschiedene Ausgangswellenleiter eingespeist wird. Die unterschiedlichen Längen der Wellenleiterabschnitte werden in einem dargestellten Ausführungsbeispiel durch unterschiedlich positionierte Bragg-Gitter als Reflektoren bewirkt.

In einem optischen Netzwerk muß sichergestellt sein, daß auch an verschiedenen Knotenpunkten die frequenz- bzw. wellenlängenmäßige Lage der Kanäle dieser Filter konstant ist, d.h. die Filter müssen absolut auf bestimmte Wellenlängen stabilisiert werden. Diese Stabilisierung kann bereits bei der Herstellung der Filter gewährleistet werden (WO 96/00915), aber beim Betrieb der Filter an verschiedenen Orten können sich die Transmissionskurven gegeneinander verschieben, beispielsweise wegen unterschiedlicher Umgebungstemperaturen. Dies führt zu unerwünschten Zusatzverlusten.

Aufgabe der Erfindung ist es, eine einfach realisierbare Stabilisierung der Wellenlänge eines optischen Filters anzugeben. Diese Aufgabe wird mit der Vorrichtung mit den Merkmalen des Anspruchs 1 und mit dem Verfahren mit den Merkmalen des Anspruchs 7 gelöst. Ausgestaltungen ergeben sich aus den abhängigen Ansprüchen.

Die bei der Erfindung verwendeten Bragg-Gitter bieten als Vorteile große Freiheiten bezüglich ihrer Filterbandbreite und eine hohe Flankensteilheit (siehe beispielsweise EP 0 284 908 B1). Die verwendete Referenzwellenlänge kann lokal und/oder zentral verteilt eingesetzt werden.

Insbesondere sind zwei sehr vorteilhafte Ausführungsformen der erfindungsgmäßen Vorrichtung hervorzuheben:
In mit Germanium oder anderen Stoffen dotierten Gläsern lassen sich durch Bestrahlung mit ultravioletter Strahlung dauerhafte Brechzahländerungen erzielen und damit auf einfache Weise Bragg-Gitter einschreiben. Dies wurde sowohl in planaren Wellenleitern (siehe F. Bilodau, B. Malo, J. Albert, D.C. Johnson, K.O. Hill, Y. Hibino, M. Abe, M. Kawachi: Photosensitization of optical fiber and silica-onsilicon/silica waveguides, Opt. Lett. 18, S. 953-955 (1993) als auch in Glasfasern (siehe G. Meltz, W.W. Morey, W.H. Glenn: Formation of Bragg-grating in optical fibers by a transverse holographic method, Opt. Lett. 14, S. 823-825 (1989)) demonstriert. Faser-Bragg-Gitter sind bereits kommerziell verfügbar.

Wenn das optische Filter als integriert-optisches Filter in Glasmaterialien, beispielsweise als Phased Array in SiO₂ auf Siliziumsubstrat ausgeführt ist (siehe R. Adar, C.H. Henry, C. Dragone, R.C.Kistler, M.A. Milbrodt: Broad-band array multiplexers made with silica waveguides on silicon, IEEE J. Lightwave Technol. 11, S. 212-221 (1993)), besteht die eine vorteilhafte Ausführungsform darin, daß neben dem Filter ein zusätzlicher streifenartigen Wellenleiter zum Führen der Referenzwellenlänge auf dem Substrat integriert ist, in den das Bragg-Gitter in einem weiteren Prozeßschritt eingeschrieben werden kann. Vorteilhaft an dieser Ausführungsform sind der enge und dauerhaft stabile Kontakt zwischen Filter und Referenzwellenlänge und das garantiert gleiche Temperaturverhalten identischer Materialien. An den integrierten Wellenleiter zum Führen der Referenzwellenlänge müssen beim Betrieb des Bragg-Gitters in Reflexion ein weiterer Wellenleiter zum Zuführen und/oder fortführen der Referenzwellenlänge zum bzw. vom Substrat und beim Betrieb dieses Gitters in Transmission zwei weitere Wellenleiter, einer zum Zuführen der Referenzwellenlänge zum Substrat und der andere zum Fortführen der Referenzwellenlänge vom Substrat, an das Substrat angekoppelt werden.

Bei der anderen vorteilhaften Ausführungsform ist ein in eine vorzugsweise aus Glas bestehende optische Faser geschriebenes Bragg-Gitter verwendet. Dies ermöglicht einen wesentlich einfacheren Aufbau, da dieses Gitter lediglich stabil mit gutem Kontakt in der Nähe des Filters befestigt werden muß. Diese Vorrichtung kann sogar nachträglich an vorhandene Filter angebracht werden, ohne das Layout eines beispielsweise integriert-optischen Filters ändern zu müssen.

Auch in Halbleitermaterialien, beispielsweise InGaAsP/InP ist die Integration von optischen Filtern, beispielsweise Phased Arrays (siehe M. Zirngibl, C. Dragone, C.H. Joyner: Demonstration of a 15x15 arrrayed wavelength demultiplexer in InP, IEEE Photon. Technol. Lett. 4, S. 1250-1253 (1992)) oder Spektrometern (siehe C. Cremer, G. Ebbinghaus, G. Heise, R. Müller-Nawrath, M. Schienle, L. Stoll: Grating sepctrograph in InGaAsP/InP for dense wavelength division multiplexing, Appl. Phys. Lett. 59 (1991), S. 627-629) mit Bragg-Gittern möglich, jedoch kann hier der Aufwand zur Herstellung sehr präziser Bragg-Gitter höher sein (siehe beispielsweise H. Unzeitig, C. Cremer, G. Heise: Fabrication of deep bragg gratings for DFB lasers and waveguide filters by wet and dry etching processes in InGaAsP, %. ECIO 89, Paris, SPIE Vol. 1141, S. 130-134).

Die Erfindung wird in der nachfolgenden Beschreibung anhand der Figuren beispielhaft näher erläutert. Es zeigen:
- Figur 1: schematisch in Draufsicht ein erstes Ausführungsbeispiel der Erfindung,
- Figur 2: in der gleichen Darstellung wie in Figur 1 ein zweites Ausführungsbeispiel der Erfindung und
- Figur 3: eine typische Transmissionskurve eines Bragg-Gitters.

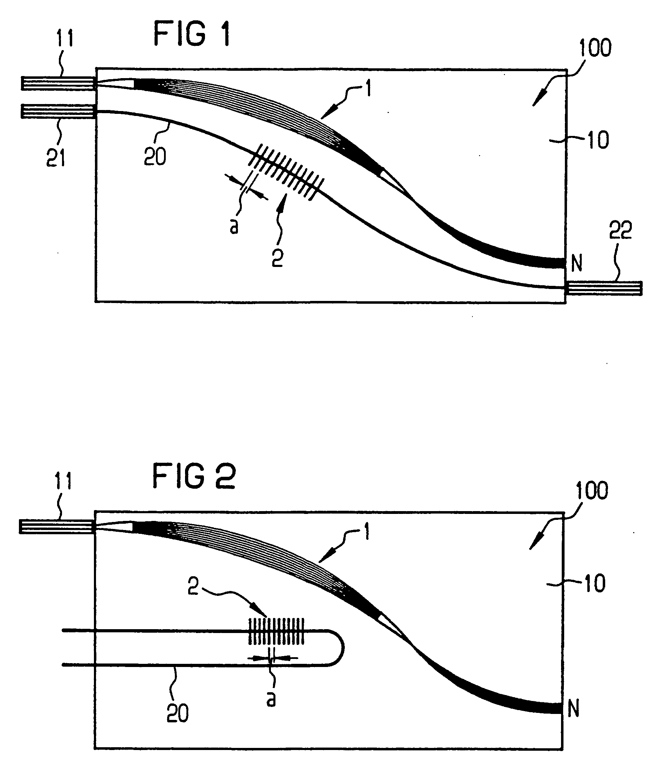

Bei den Ausführungsbeispielen nach den Figuren 1 und 2 ist jeweils auf der Oberfläche 100 eines Substrats 10 ein optisches Filter 1 in Form eines Wellenlängen-Multiplexers/Demultiplexers zum Multiplexen und/oder Demultiplexen einer Zahl N ≥ 1 Wellenlängenkanäle ausgebildet.

Der Multiplexer/Demultiplexer 1 nach den Figuren 1 und 2 ist beispielsweise in Form eines Phased Arrays ausgebildet (WO 96/00915, dort insbesondere Figur 1 und dazugehörige Beschreibung). Wird das Phased Array 1 als Demultiplexer betrieben, werden die mehreren Wellenlängenkanäle dem Phased Array 1 durch beispielsweise eine optische Faser 11 zugeführt und im Phased Array 1 räumlich voneinander getrennt, wonach die getrennten Kanäle einzelnen Auskoppelwellenleitern entnehmbar sind. Wird das Phased Array 1 dagegen als Multiplexer betrieben, fungieren die Auskoppelwellenleiter als Einkoppelwellenleiter für die einzelnen Kanäle, die im Phased Array 1 zusammengeführt werden und gemeinsam in der Faser 11 fortgeleitet werden.

Die Erfindung ist jedoch nicht auf bestimmte Strukturen eines optischen Filters beschränkt, sondern kann bei allen optischen Filtern angewandt werden.

Das Erfindungswesentliche der Vorrichtung zur wellenlängenmäßigen Stabilisierung eines optischen Filters 1 besteht darin, daß in der Nähe des Filters 1 ein Bragg-Gitter 2 angeordnet ist, dem eine vorbestimmte optische Referenzwellenlänge λ0 zuführbar ist, wobei unabhängig von den durch das Filter übertragenen Wellenlängenkanälen eine Wellenlängenübertragungscharakteristik des Bragg-Gitters 2 in Reflexion und/oder Transmission in Bezug auf die Referenzwellenlänge λ0 ausgenutzt wird.

Bei den Ausführungsbeispielen nach den Figuren 1 und 2 ist es so eingerichtet, daß das Bragg-Gitter 2 in einem zum Führen der Referenzwellenlänge λ0 vorgesehenen optischen Wellenleiter 20 angeordnet ist, der vorzugsweise ein streifenartiger Wellenleiter ist. Unter streifenartigem Wellenleiter ist ein Wellenleiter zu verstehen, der eine Lächsachse aufweist, längs der sich eine im Wellenleiter geführte optische Welle ausbreitet und bei dem die geführte Welle auf beiden Seiten der Längsachse seitlich begrenzt ist. Beispiele solcher streifenartigen Wellenleiter sind integrierte Streifenwellenleiter, wie beispielsweise Rippenwellenleiter oder eindiffundierte Streifenwellenleiter aber auch optische Fasern usw. Auch das beispielhaft dargestellte Phased Array 1 besteht im wesentlichen aus integrierten streifenartigen Wellenleitern.

Bei dem Beispiel nach Figur 1 sind das Bragg-Gitter 2 und der zum Führen der Referenzwellenlänge λ0 vorgesehene streifenartige Wellenleiter 20 an der Oberfläche 100 des Substrats 10 integriert.

Die Referenzwellenlänge λ0 kann beispielsweise in einer optischen Faser 21 zugeführt und in den integrierten Wellenleiter 20 eingekoppelt werden. Ein vom Bragg-Gitter 2 reflektierter Anteil der Referenzwellenlänge λ0 kann durch diese Faser 21 einem optischen Detektor zugeführt werden.

Ein durch das Bragg-Gitter 2 transmittierter Anteil der Referenzwellenlänge λ0 kann durch eine an den integrierten Wellenleiter angekoppelte optische Faser 22 ebenfalls einem optischen Detektor zugeführt werden.

Wird nur der vom Gitter 2 reflektierte Anteil der Referenzwellenlänge λ0 verwendet, genügt die Faser 21 allein. Wird dagegen der durch das Gitter 2 transmittierte Anteil allein oder zusätzlich zum reflektierten Anteil verwendet, muß zusätzlich die Faser 22 vorhanden sein.

Anstelle der Faser 21 könnte auch die Faser 22 als Faser zum Einkoppeln der Referenzwellenlänge λ0 in den integrierten Wellenleiter 20 verwendet werden.

Prinzipiell könnte auch ein integrierter streifenartiger Wellenleiter des Phased Arrays 1 selbst als der integrierte Wellenleiter 20 verwendet werden, in welchem dann das Bragg-Gitter 2 auszubilden wäre. In diesem Fall würde jedoch ein Kanal des optischen Filters 1 verlorengehen. Zweckmäßiger ist es deshalb, wenn der zum Führen der Referenzwellenlänge λ0 vorgesehene Wellenleiter 20 und das Bragg-Gitter 2 gesondert vom Filter 1 auf dem Substrat 10 integriert sind, so wie es in der Figur 1 dargestellt ist.

Beim Ausführungsbeispiel nach Figur 2 ist dagegen das Bragg-Gitter 2 in einem zum Führen der Referenzwellenlänge λ0 vorgesehenen Wellenleiter 20 in Form einer optischen Faser ausgebildet, die an dem Substrat 10 angebracht ist, auf welchem das optische Filter 1 integriert ist. Beispielsweise ist die Faser 20 auf die Oberfläche 100 des Substrats 10 geklebt.

Die Faser 20 ist beispielsweise hufeisenförmig gebogen, so daß bei Verwendung des durch das Bragg-Gitter 2 transmittierten Anteils der Referenzwellenlänge λ0 auf der gleichen Seite des Substrats 10 ein- und ausgekoppelt werden kann. Das Bragg-Gitter 2 ist in diesem Fall zweckmäßigerweise in einem geradlinigen Schenkel der hufeisenförmigen Faser 20 ausgebildet.

Die Faser 20 nach Figur 2 könnte auch einen Verlauf ähnlich wie der integrierte Wellenleiter 20 nach Figur 1 aufweisen. Umgekehrt könnte auch der integrierte Wellenleiter 20 nach Figur 1 einen hufeisenförmigen Verlauf ähnlich wie die Faser 20 nach Figur 2 haben.

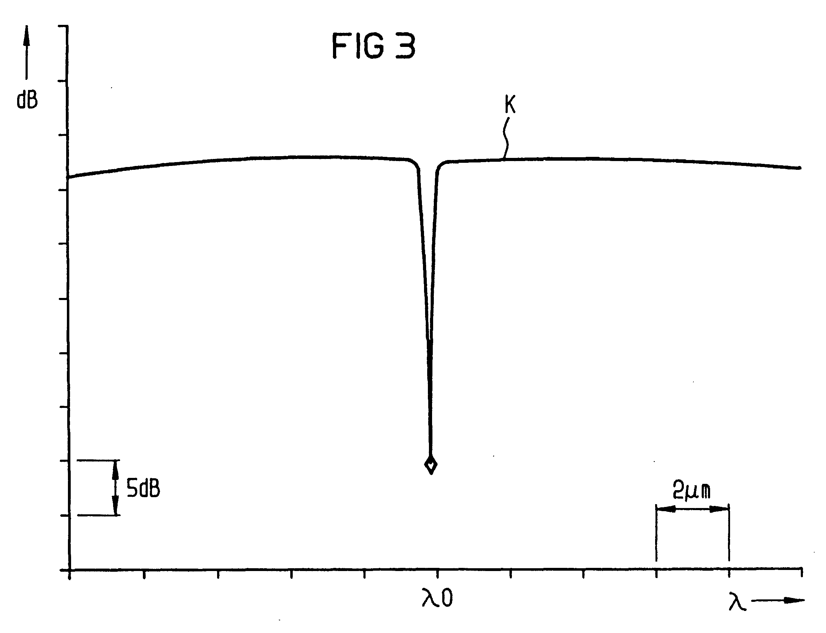

Die in den Figuren 1 und 2 schematisch dargestellten Bragg-Gitter 2 weisen üblicherweise, z.B. bei fester Gitterkonstante, qualitativ eine Transmissionskurve auf, wie sie in der Figur 3 dargestellt ist. In der Figur 3 die in dB gemessene Dämpfung des durch das Bragg-Gitter 2 transmittierten Lichtanteils in Abhängigkeit von der Wellenlänge λ dargestellt. Die dargestellte typische Transmissionskurve K weist bei einer bestimmten Wellenlänge λ0, die als Referenzwellenlänge verwendet wird, ein scharfes Minimum auf, das einer maximalen Transmission und einer minimalen Reflexion am Gitter 2 entspricht.

In diesem Fall wird die erfindungsgemäße Vorrichtung vorteilhafterweise so betrieben, daß das Bragg-Gitter 2 durch Steuerung der Gitterkonstanten a des Gitters 2 auf minimale Reflexion und/oder maximale Transmission der konstanten Referenzwellenlänge λ0 geregelt wird. Die Steuerung der Gitterkonstanten a kann beispielsweise über die Temperatur T des Gitters 2 erfolgen, auf der auch das in der Nähe befindliche optische Filter 1 liegt.

Im Fall von Bragg-Gittern 2, deren Transmissionskurve bei einer bestimmten Wellenlänge, die als Referenzwellenlänge λ0 zu verwenden ist, nicht wie die Kurve K nach Figur 3 ein scharfes Minimum, sondern ein scharfes Maximum aufweisen, das einer minimalen Transmission und einer maximalen Reflexion am Gitter 2 entspricht, wird das Gitter 2 durch Steuerung der Gitterkonstanten a des Gitters 2 auf minimale Transmission und/oder maximale Reflexion der konstanten Referenzwellenlänge λ0 geregelt. Auch hier kann die Gitterkonstante a durch die Temperatur des Gitters 2 geregelt werden.

## Patentansprüche

1. Wellenlängenmäßig stabilisiertes optisches Filter (1), das als integriert-optisches Filter auf einem Substrat ausgebildet ist,
**dadurch gekennzeichnet,**
**daß** ein vom Filter getrennter streifenartiger planarer Wellenleiter mit einem darin ausgebildeten Bragg-Gitter (2) oder eine optische Faser, in die ein Bragg-Gitter geschrieben ist, in der Nähe des Filters (1) in dem Substrat integriert beziehungsweise an dem Substrat angebracht ist,
**daß** dem Bragg-Gitter (2) durch den vom Filter getrennten planaren Wellenleiter beziehungsweise durch die Faser ein Referenzsignal mit einer vorbestimmten optischen Referenzwellenlänge zuführbar ist und
**daß** das aufgrund der Wellenlängencharakteristik des Bragg-Gitters (2) reflektierte und/oder transmittierte Referenzsignal einer das Filter (1) stabilisierenden Steuerung zuführbar ist.

2. Vorrichtung nach Anspruch 1,
bei der das Filter als integriert-optisches Filter in Glasmaterial ausgebildet ist und
bei der der Wellenleiter mit dem Bragg-Gitter als zusätzlicher streifenartiger planarer Wellenleiter aus Glasmaterial neben dem Filter integriert ist.

3. Vorrichtung nach Anspruch 1,
bei der das Filter als integriert-optisches Filter in Halbleitermaterial ausgebildet ist und
bei der der Wellenleiter mit dem Bragg-Gitter als zusätzlicher streifenartiger planarer Wellenleiter aus Halbleitermaterial neben dem Filter integriert ist.

4. Vorrichtung nach einem der Ansprüche 1 bis 3,
bei der das optische Filter (1) in Form eines Wellenlängen-Multiplexers/Demultiplexers ausgebildet ist

5. Vorrichtung nach Anspruch 4,
bei der das optische Filter (1) in Form eines Phased Arrays ausgebildet ist.

6. Verfahren zum Betrieb einer Vorrichtung zur wellenlängenmäßigen Stabilisierung eines optischen Filters (1), bei der in der Nähe des Filters (1) ein Wellenleiter mit einem darin ausgebildeten Bragg-Gitter (2) angeordnet ist, dem ein Referenzsignal mit einer vorbestimmten optische Referenzwellenlänge (λ0) zugeführt wird,
**dadurch gekennzeichnet**,
daßdurch das Referenzsignal eine das Filter (1) stabilisierende Steuerung beaufschlagt wird, durch die die Gitterkonstante (a) des Bragg-Gitters (2) auf maximale Transmission und/oder minimale Reflexion der Referenzwellenlänge (λ0) geregelt wird.

7. Verfahren zum Betrieb einer Vorrichtung zur wellenlängenmäßigen Stabilisierung eines optischen Filters (1), bei der in der Nähe des Filters (1) ein Wellenleiter mit einem darin ausgebildeten Bragg-Gitter (2) angeordnet ist, dem ein Referenzsignal mit einer vorbestimmten optische Referenzwellenlänge (λ0) zugeführt wird,
**dadurch gekennzeichnet,**
**daß** durch das Referenzsignal eine das Filter (1) stabilisierende Steuerung beaufschlagt wird, durch die die Gitterkonstante (a) des Bragg-Gitters (2) auf minimale Transmission und/oder maximale Reflexion der Referenzwellenlänge (λ0) geregelt wird.

8. Verfahren nach Anspruch 6 oder 7,
bei dem die Gitterkonstante (a) des Bragg-Gitters (2) über die Temperatur des Gitters geregelt wird.

## Claims

1. Wavelength-stabilized optical filter (1) formed as an integrated optical filter on a substrate,
**characterized**
**in that** a strip-like planar waveguide - separated from the filter - with a Bragg grating (2) formed therein or an optical fibre, into which a Bragg grating is written, is integrated in the substrate or fitted at the substrate in the vicinity of the filter (1),
**in that** a reference signal having a predetermined optical reference wavelength can be fed to the Bragg grating (2) through the planar waveguide separated from the filter or through the fibre, and
**in that** the reference signal that is reflected and/or transmitted on account of the wavelength characteristic of the Bragg grating (2) can be fed to a control that stabilizes the filter (1).

2. Device according to Claim 1,
in which the filter is formed as an integrated optical filter in glass material, and
in which the waveguide with the Bragg grating is integrated as an additional strip-like planar waveguide made of glass material beside the filter.

3. Device according to Claim 1,
in which the filter is formed as an integrated optical filter in semiconductor material, and
in which the waveguide with the Bragg grating is integrated as an additional strip-like planar waveguide made of semiconductor material beside the filter.

4. Device according to one of Claims 1 to 3,
in which the optical filter (1) is embodied in the form of a wavelength division multiplexer/demultiplexer.

5. Device according to Claim 4,
in which the optical filter (1) is embodied in the form of a phased array.

6. Method for operating a device for wavelength stabilization of an optical filter (1), in which a waveguide with a Bragg grating (2) formed therein is arranged in the vicinity of the filter (1), a reference signal having a predetermined optical reference wavelength (λ0) being fed to the said grating,
**characterized**
**in that** the reference signal is applied to a control that stabilizes the filter (1) and regulates the grating constant (a) of the Bragg grating (2) to maximum transmission and/or minimum reflection of the reference wavelength (λ0).

7. Method for operating a device for wavelength stabilization of an optical filter (1), in which a waveguide with a Bragg grating (2) formed therein is arranged in the vicinity of the filter (1), a reference signal having a predetermined optical reference wavelength (λ0) being fed to the said grating,
**characterized**
**in that** the reference signal is applied to a control that stabilizes the filter (1) and regulates the grating constant (a) of the Bragg grating (2) to minimum transmission and/or maximum reflection of the reference wavelength (λ0).

8. Method according to Claim 6 or 7,
in which the grating constant (a) of the Bragg grating (2) is regulated by way of the temperature of the grating.

## Revendications

1. Filtre (1) optique stabilisé en longueur d'onde, qui est constitué en filtre optique intégré sur un substrat,
**caractérisé**
**en ce qu'**un guide d'onde plan en forme de ruban et séparé du filtre ayant un réseau (2) de Bragg qui y est constitué, ou une fibre optique dans laquelle est inscrit un réseau de Bragg, est placé à proximité du filtre (1) en étant intégré dans le substrat ou sur le substrat,
**en ce qu'**il peut être envoyé au réseau (2) de Bragg, par le guide d'onde plan séparé du filtre ou par la fibre, un signal de référence ayant une longueur d'onde optique de référence déterminée à l'avance et
**en ce que** le signal de référence réfléchi et/ou transmis en raison de la caractéristique de longueur d'onde du réseau (2) de Bragg peut être envoyé à une commande de stabilisation du filtre (1).

2. Dispositif suivant la revendication 1,
dans lequel le filtre est constitué en filtre optique intégré dans du matériau en verre et
dans lequel le guide d'onde est intégré sous la forme d'un guide d'onde plan de type à ruban supplémentaire en matériau en verre à côté du filtre.

3. Dispositif suivant la revendication 1,
dans lequel le filtre est constitué en filtre optique intégré dans du matériau semi-conducteur et
dans lequel le guide d'onde ayant le réseau de Bragg est intégré sous la forme d'un guide d'onde plan supplémentaire de type à ruban en matériau semi-conducteur à côté du filtre.

4. Dispositif suivant l'une des revendications 1 à 3,
dans lequel le filtre (1) optique est constitué sous la forme d'un multiplexeur/démultiplexeur en longueur d'onde.

5. Dispositif suivant la revendication 4,
dans lequel le filtre (1) optique est constitué sous la forme d'un Phased Array.

6. Procédé pour faire fonctionner un dispositif de stabilisation en longueur d'onde d'un filtre (1) optique, dans lequel il est disposé à proximité du filtre (1) un guide d'onde ayant un réseau (2) de Bragg constitué en son sein, auquel est envoyé un signal de référence d'une longueur d'onde (λ0) de référence optique déterminée à l'avance,
**caractérisé**
**en ce que** l'on envoie le signal de référence à une commande de stabilisation du filtre (1) par laquelle la constante (a) du réseau (2) de Bragg est réglée à une transmission maximum et/ou à une réflexion minimum de la longueur d'onde (λ0) de référence.

7. Procédé pour faire fonctionner un dispositif de stabilisation en longueur d'onde d'un filtre (1) optique, dans lequel il est disposé, à proximité du filtre (1), un guide d'onde ayant un réseau (2) de Bragg constitué en son sein, auquel est envoyé un signal de référence d'une longueur d'onde (λ0) de référence optique déterminée à l'avance,
**caractérisé**
**en ce que** l'on envoie le signal de référence à une commande de stabilisation du filtre (1) par laquelle la constante (a) du réseau (2) de Bragg est réglée à une transmission minimum et/ou à une réflexion maximum de la longueur d'onde (λ0) de référence.

8. Procédé suivant la revendication 6 ou 7,
dans lequel on règle la constante (a) du réseau (2) de Bragg par la température du réseau.
